(19) Europäisches Patentamt
European Patent Office
Office européen des brevets

(11) **EP 3 211 276 B1**

(12) **EUROPEAN PATENT SPECIFICATION**

(45) Date of publication and mention
of the grant of the patent:
**10.04.2019 Bulletin 2019/15**

(51) Int Cl.:
**F16H 61/4192** *(2010.01)*

(21) Application number: **16199686.3**

(22) Date of filing: **18.11.2016**

(54) **HYDRAULIC MACHINE WITH DIAGNOSIS SYSTEM, RENEWABLE-ENERGY TYPE POWER GENERATING APPARATUS AND METHOD FOR DIAGNOSING HYDRAULIC MACHINE**

HYDRAULISCHE MASCHINE MIT DIAGNOSESYSTEM, VORRICHTUNG ZUR ERZEUGUNG ERNEUERBARER ENERGIE UND DIAGNOSEVERFAHREN FÜR EINE HYDRAULISCHE MASCHINE

MACHINE HYDRAULIQUE AVEC SYSTÈME DE DIAGNOSTIC, APPAREIL DE GÉNÉRATION DE PUISSANCE DE TYPE À ÉNERGIE RENOUVELABLE ET PROCÉDÉ DE DIAGNOSTIC DE MACHINE HYDRAULIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.02.2016 JP 2016035547**

(43) Date of publication of application:
**30.08.2017 Bulletin 2017/35**

(73) Proprietor: **Mitsubishi Heavy Industries, Ltd.**
**Tokyo 108-8215 (JP)**

(72) Inventors:
• **Hayashi, Toshikazu**
**Tokyo, 108-8215 (JP)**
• **Yuge, Atsushi**
**Tokyo, 108-8215 (JP)**
• **Hirano, Haruhiko**
**Tokyo, 108-8215 (JP)**

(74) Representative: **Henkel, Breuer & Partner**
**Patentanwälte**
**Maximiliansplatz 21**
**80333 München (DE)**

(56) References cited:
**EP-A1- 0 576 813     EP-A1- 2 889 480**

• **Anonymous: "Rotork: Smart Valve Monitor (SVM) - Sticking Solenoid Valve", , 26 January 2016 (2016-01-26), XP055374170, Retrieved from the Internet: URL:http://web.archive.org/web/20160126010 138/http://www.rotork.com/en/product/index /stickingsolenoidvalve [retrieved on 2017-05-18]**
• **Anonymous: "Understanding The Smart Valve Monitoring", , 5 January 2011 (2011-01-05), XP055465942, Retrieved from the Internet: URL:https://web.archive.org/web/2011010510 2502/http://www.rotork.com/public/backend/ uploads/fd.php?file=documentversion/item/p rimary/4479/file1/f903e_svm_10-10.pdf [retrieved on 2018-04-10]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present disclosure relates to a method for diagnosing a hydraulic machine, a hydraulic machine with a diagnosis system, and a renewable-energy type power generating apparatus.

BACKGROUND ART

Typically, as disclosed in WO 2014/024232 A, a solenoid valve configured to drive a valve body by attracting the valve body toward a core with a magnetic force generated by exciting a coil is used as a valve (high-pressure valve or low-pressure valve) for controlling a pressure of a working chamber of a hydraulic machine.
EP 28898480 A1 discloses a diagnostic system and method for a hydraulic machine used in a wind turbine generator which includes a high-pressure valve and a low-pressure valve provided for controlling the supply and discharge of hydraulic fluid to and from a working chamber to convert a reciprocating motion of a piston in the working chamber to a rotational motion of a rotor shaft. The high-pressure valve and the low-pressure valve are solenoid valves which respectively include a valve body configured to be attracted toward a core by a magnetic force generated by supplying electric current to a coil. This document teaches to detect the pressure in the working cylinder and to monitor the detected pressure in order to detect an abnormality in the hydraulic machine including an abnormality of the high-pressure valve and the low-pressure valve when the duration of the high-level of the cylinder pressure is longer or shorter than that of a normal operation.
EP 0 576 813 A1 discloses a solenoid valve with a non-magnetic layer disposed between the valve body and the core.
The brochure titled "Understanding The Smart Valve Monitoring" discloses that a sticking solenoid valve leads to the valve taking longer to switch states, which is measured to detect a fault.

SUMMARY

Meanwhile, if a core and a valve body of a solenoid valve come into direct contact, the valve body becomes less likely to separate from the core even after the coil is non-excited, which may deteriorate responsiveness of the valve body. Thus, in some cases, a position restricting part is provided to restrict a position at which the valve is closest to the core when being attracted.
However, as a result of intensive researches, the inventors found that abrasion of the position restricting part gradually develops due to repetitive collision between the valve body and the position restricting part accompanying a long-term use of the valve.
An object of at least some embodiments of the present invention is to provide a hydraulic machine with a diagnosis system, a method of diagnosing a hydraulic machine, and a renewable-energy type power generating apparatus, whereby it is possible to detect a damage of a position restricting part for restricting a position of a valve body.
A hydraulic machine according to the present invention comprises the features of claim 1 and is for a hydraulic machine which comprises a rotor shaft, a cylinder, a piston forming a working chamber together with the cylinder, and a high-pressure valve and a low-pressure valve provided for the working chamber, and which is configured to perform conversion between rotational motion of the rotor shaft and reciprocal motion of the piston. At least one of the high-pressure valve or the low-pressure valve comprises a solenoid valve which includes a valve body configured to be attracted toward a core by a magnetic force generated by supplying electric current to a coil and a position restricting part for restricting a position at which the valve body is closest to the core when attracted. A diagnosis system of the hydraulic machine comprises: a pressure sensor for detecting a pressure of the working chamber; a response-delay calculating part configured to calculate a response delay which is a period of time from a point of time when supply of electric current to the coil is stopped to a point of time when the valve body separates from the core, on the basis of a temporal change in a cylinder pressure obtained by the pressure sensor; and a damage detecting part configured to detect a damage of the position restricting part on the basis of the response delay.
As a result of intensive researches by the present inventors, it was found that a period (response delay) from the time when supply of electric current to the coil is stopped to the time when the valve body separates from the core tends to become longer with development of a damage of the position restricting part of the solenoid valve.
With the above configuration, it is possible to detect a damage of the position restricting part of the solenoid valve on the basis of a response delay from the time when supply of electric current to the coil is stopped to the time when the valve body separates from the core.
In some embodiments, each of the valve body and the core comprises a magnetic material, and the solenoid valve is configured to form a gap between the valve body and the core when the valve body and the core are closest to each other.

With the above configuration, the position of the valve body is restricted by the position restricting part when the valve body is closest to the core, and thereby a gap is formed between the valve body and the core. Thus, as compared to a case in which the core of the solenoid valve and the valve body contact each other directly, responsiveness of the valve body can be improved.

In the invention, the position restricting part comprises a non-magnetic layer disposed between the valve body and the core.

In some embodiments, in the above configuration, the non-magnetic layer comprises a plate member comprising a non-magnetic material.

In some embodiments, in the above configuration, the non-magnetic layer comprises a sprayed layer comprising a non-magnetic material disposed on a surface of at least one of the valve body or the core.

With the above configurations, it is possible to detect abrasion of the non-magnetic layer serving as the position restricting part, on the basis of the response delay from the time when supply of electric current to the coil is stopped to the time when the valve body separates from the core, due to the principle described in the above.

With the above configuration, it is possible to detect a damage of the position restricting part of the solenoid valve on the basis of the response delay from the time when supply of electric current to the coil is stopped to the time when the valve body separates from the core.

In some embodiments, the hydraulic machine is configured to cause the cylinder corresponding to the solenoid valve including the position restricting part to be in an inactive state of not generating a displacement, if a damage of the position restricting part is detected by the diagnosis system.

With the above configuration, if a damage of the position restricting part is detected, the cylinder corresponding to the solenoid valve including the position restricting part is caused to be in an inactive state. Accordingly, it is possible to inactivate a solenoid valve that does not operate normally due to a damage of the position restricting part, and to operate the hydraulic machine appropriately.

A renewable-energy type power generating apparatus according to the present invention comprises the features of claim 6 including: a rotor configured to receive renewable energy to rotate; a hydraulic pump configured to be driven by the rotor to pressurize working oil; a hydraulic motor configured to be driven by the working oil pressurized by the hydraulic pump; a high-pressure line connecting an outlet of the hydraulic pump and an inlet of the hydraulic motor; a low-pressure line connecting an outlet of the hydraulic motor and an inlet of the hydraulic pump; and a generator configured to be driven by the hydraulic motor. At least one of the hydraulic pump or the hydraulic motor is the hydraulic machine according to the invention.

With the above configuration, it is possible to detect a damage of the position restricting part of the solenoid valve of the hydraulic machine on the basis of a response delay from the time when supply of electric current to the coil is stopped to the time when the valve body separates from the core.

A method, according to the present invention, comprises the features of claim 7 and is for diagnosing a hydraulic machine which comprises a rotor shaft, a cylinder, a piston forming a working chamber together with the cylinder, and a high-pressure valve and a low-pressure valve provided for the working chamber, and which is configured to perform conversion between rotational motion of the rotor shaft and reciprocal motion of the piston. At least one of the high-pressure valve or the low-pressure valve comprises a solenoid valve which includes a valve body configured to be attracted toward a core by a magnetic force generated by supplying electric current to a coil and a position restricting part for restricting a position at which the valve body is closest to the core when attracted. The method comprises: a pressure detecting step of detecting a pressure of the working chamber; a step of calculating a response delay which is a period of time from a point of time when supply of electric current to the coil is stopped to a point of time when the valve body separates from the core, on the basis of a temporal change in a cylinder pressure obtained in the pressure detecting step; and a step of detecting a damage of the position restricting part on the basis of the response delay.

According to the above method, it is possible to detect a damage of the position restricting part of the solenoid valve of the hydraulic machine on the basis of a response delay from the time when supply of electric current to the coil is stopped to the time when the valve body separates from the core.

BRIEF DESCRIPTION OF DRAWINGS

FIG. 1 is a schematic diagram of a wind turbine power generating apparatus according to an embodiment.
FIG. 2 is a schematic configuration diagram of a hydraulic motor (hydraulic machine) according to an embodiment.
FIG. 3 is a schematic diagram illustrating a configuration of a diagnosis system according to an embodiment.
FIG. 4 is a schematic cross-sectional view of a configuration of a high-pressure valve and a low-pressure valve according to an embodiment.

FIGs. 5A to 5B are each a cross-sectional view of a solenoid valve (high-pressure valve) according to an embodiment.

FIG. 6 is a graph showing a temporal change in a working-chamber pressure of a hydraulic machine according to an embodiment.

FIG. 7 is a graph of an example of a temporal change in a response delay of a hydraulic motor.

FIGs. 8A and 8B are each a cross-sectional view of a configuration of a solenoid valve according to an embodiment.

FIG. 9 is a diagram of a response delay divided into a component that depends on a rotation speed and a component that depends on a piston speed.

FIG. 10 is a diagram of signal processing which represents a method of calculating a normalized response delay according to an embodiment.

DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not intended to limit the scope of the present invention.

Firstly, an overall configuration of a wind turbine power generating apparatus will be described. A wind turbine power generating apparatus is an example of a renewable-energy type power generating apparatus including a hydraulic machine to which a diagnosis system and a diagnosis method according to an embodiment are to be applied.

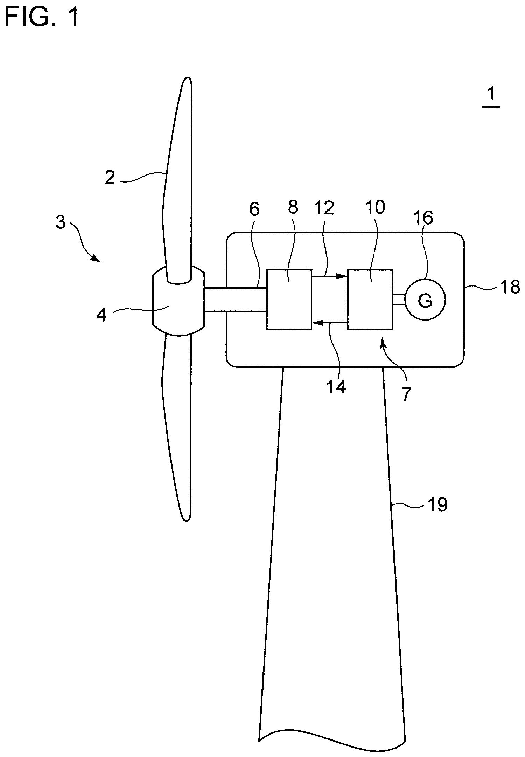

FIG. 1 is a schematic diagram of a wind turbine power generating apparatus according to an embodiment. As illustrated in the drawing, the wind turbine power generating apparatus 1 includes a rotor 3 configured to receive wind, which is a renewable energy, to rotate, a hydraulic transmission 7 for transmitting rotation of the rotor 3, and a generator 16 for generating electric power.

The rotor 3 includes at least one blade 2, and a hub 4 to which the at least one blade 2 is mounted.

The hydraulic transmission 7 includes a hydraulic pump 8 connected to the rotor 3 via a rotor shaft 6, a hydraulic motor 10, and a high-pressure line 12 and a low-pressure line 14 connecting the hydraulic pump 8 and the hydraulic motor 10. The high-pressure line 12 connects an outlet of the hydraulic pump 8 and an inlet of the hydraulic motor 10, while the low-pressure line 14 connects an outlet of the hydraulic motor 10 and an inlet of the hydraulic pump 8.

The generator 16 is coupled to the hydraulic motor 10 via an output shaft of the hydraulic motor 10. In an embodiment, the generator 16 is a synchronous generator connected to a utility grid and driven by the hydraulic motor 10.

The hydraulic pump 8, the hydraulic motor 10, and the generator 16 may be disposed inside a nacelle 18 disposed on a tower 19.

In the wind turbine power generating apparatus 1 illustrated in FIG. 1, rotational energy of the rotor 3 is inputted into the generator 16 via the hydraulic transmission 7 including the hydraulic pump 8 and the hydraulic motor 10, and electric power is generated by the generator 16.

When the at least one blade 2 receives wind, the entire rotor 3 rotates in response to the power of wind, so that the hydraulic pump 8 is driven by the rotor 3 to increase the pressure of working oil, thereby producing high-pressure working oil (pressurized oil). The pressurized oil produced by the hydraulic pump 8 is supplied to the hydraulic motor 10 via the high-pressure line 12, and drives the hydraulic motor 10. Electric power is generated by the generator 16 connected to the hydraulic motor 10 via the output shaft. The low-pressure working oil having performed work in the hydraulic motor 10 flows again into the hydraulic pump 8 via the low-pressure line 14.

The hydraulic pump 8 and the hydraulic motor 10 may be of a variable-displacement type whereby the displacement is adjustable.

In some embodiments, at least one of the above described hydraulic pump 8 or the hydraulic motor 10 is a hydraulic machine 20 described below.

Next, configuration of a hydraulic machine and a diagnosis system for a hydraulic machine according to an embodiment will be described.

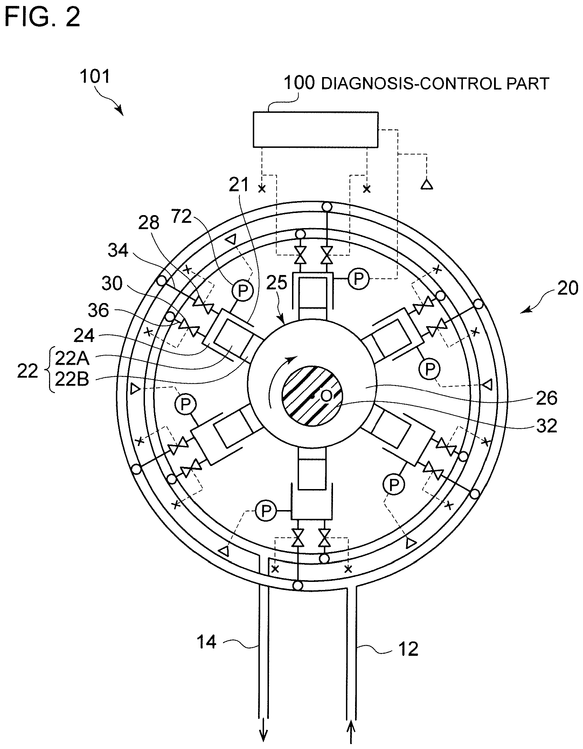

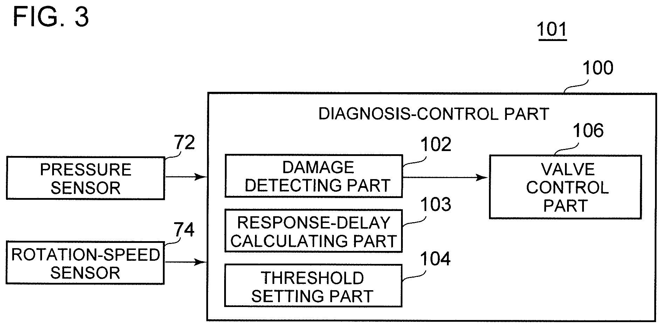

FIG. 2 is a schematic configuration diagram of a hydraulic machine according to an embodiment, and FIG. 3 is a schematic configuration diagram of a diagnosis system according to an embodiment.

As depicted in FIG. 2, the hydraulic machine 20 to be diagnosed by a diagnosis system and a diagnosis method according to an embodiment includes a rotor shaft 32, a cylinder 21, a piston 22 forming a working chamber 24 together with the cylinder 21, a high-pressure valve 28 and a low-pressure valve 30 provided for the working chamber 24, and a cam 26 (conversion mechanism) for performing conversion between the reciprocal motion of the piston 22 and the rotational motion of the rotor shaft 32. The cam 26 has a cam curved surface configured to contact the piston 22.

In the hydraulic machine 20, a plurality of cylinders 21 and a plurality of pistons 22 are disposed along the circumferential direction of the hydraulic machine 20.

The piston 22 preferably includes a piston body 22A which slides inside the cylinder 21, and a piston roller or a piston shoe which is attached to the piston body 22A and which contacts the cam curved surface of the cam 26, from the viewpoint of smooth conversion of the reciprocal motion of the piston 22 into the rotational motion of the rotor shaft 32. In the example depicted in FIG. 2, the piston 22 includes a piston body 22A and a piston shoe 22B.

The cam 26 is an eccentric cam disposed eccentrically from the axial center O of the rotor shaft (crank shaft) 32 of the hydraulic machine 20. While the piston 22 performs a set of upward and downward movement, the cam 26 and the rotor shaft 32 to which the cam 26 is mounted perform one revolution.

In another embodiment, the cam 26 is an annular-shaped multi-lobed cam (ring cam) with a plurality of lobes. In this case, while the cam 26 and the rotor shaft 32 to which the cam 26 is mounted perform one revolution, the piston 22 performs as many sets of upward and downward movement as the number of the lobes.

The high-pressure valve 28 is disposed in a high-pressure communication line 34 between the working chamber 24 and the high-pressure line 12 disposed outside the working chamber 24, and configured to be capable of switching the communication state between the working chamber 24 and the high-pressure line 12. The low-pressure valve 30 is disposed in a low-pressure communication line 36 between the working chamber 24 and the low-pressure line 14 disposed outside the working chamber 24, and configured to be capable of switching the communication state between the working chamber 24 and the low-pressure line 14.

At least one of the high-pressure valve 28 or the low-pressure valve 30 is a solenoid valve which can be controlled to open and close by switching supply of excitation current to a coil.

A diagnosis system 101 of the hydraulic machine 20 depicted in FIGs. 2 and 3 includes a pressure sensor 72 for detecting a pressure of each working chamber 24, a rotation-speed sensor 74 for detecting a rotation speed of the rotor shaft 32, and a diagnosis-control part 100 for diagnosing and controlling the hydraulic machine 20 on the basis of a result of detection obtained by the pressure sensor 72 and/or the rotation-speed sensor 74.

The diagnosis-control part 100 of the diagnosis system 101 includes a damage detecting part 102, a response-delay calculating part 103, a threshold setting part 104, and a valve control part 106. The diagnosis system 101 is configured to detect a damage of a solenoid valve (the high-pressure valve 28 or the low-pressure valve 30) of the hydraulic machine 20 as described below.

In the hydraulic machine 20 depicted in FIG. 2, valves are controlled in accordance with reciprocal motion of a piston 22, so that a pressure of the working chamber 24, also referred to as a working chamber pressure hereinafter, changes cyclically in accordance with the reciprocal motion of the piston 22. Now, configuration of the high-pressure valve 28 and the low-pressure valve 30 of the hydraulic machine 20 will be described, along with a cyclic change of the working chamber pressure caused by an opening-closing control on the valves.

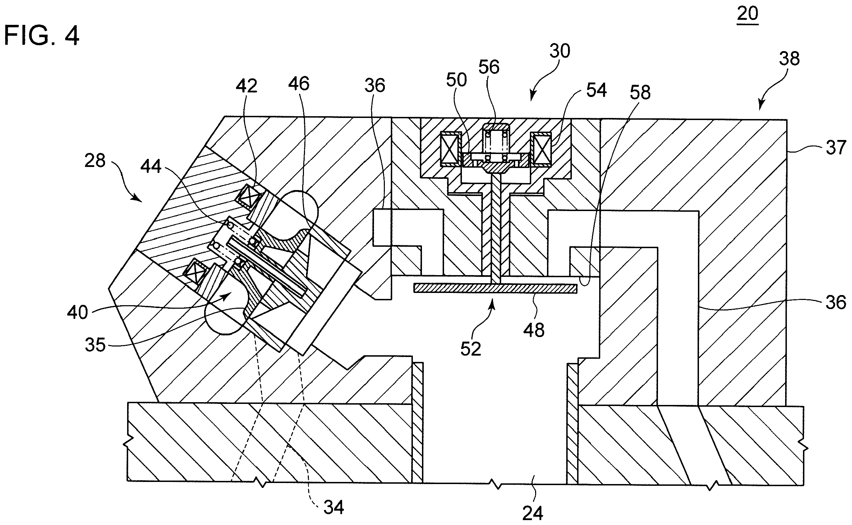

FIG. 4 is a schematic cross-sectional view of a configuration of the high-pressure valve 28 and the low-pressure valve 30. In the example depicted in FIG. 4, both of the high-pressure valve 28 and the low-pressure valve 30 are solenoid valves, and FIG. 4 is a view of a situation in which the high-pressure valve 28 is closed and the low-pressure valve 30 is open. In some embodiments, as depicted in FIG. 4, the high-pressure valve 28, the low-pressure valve 30, and a casing 37 of the valves may be unitized and configured as a valve unit 38.

The high-pressure valve 28 depicted in FIG. 4 includes a movable unit 40 including a valve body 35, a solenoid coil 42 that functions as an actuator for moving the movable unit 40 between a valve-open position and a valve-closed position, a spring 44, and a valve seat 46. The high-pressure valve 28 is a poppet solenoid valve of normally-closed type, with the valve seat 46 disposed at a working-chamber 24 side of the valve body 35. The high-pressure valve 28 is capable of switching the communication state between the working chamber 24 and the high-pressure line 12 (see FIG. 12) by movement of the movable unit 40 caused by the electromagnetic force of the solenoid coil 42 or the biasing force of the spring 44.

The low-pressure valve 30 illustrated in FIG. 4 includes a movable unit 52 including a valve body 48 and an armature 50, a solenoid coil 54, a spring 56, and a valve seat 58. The low-pressure valve 30 is a poppet solenoid valve (poppet valve) of normally-open type, with the valve body 48 disposed at a working-chamber 24 side of the valve seat 58. The low-pressure valve 30 is capable of switching the communication state between the working chamber 24 and the low-pressure line 14 (see FIG. 2) by movement of the movable unit 52 caused by the electromagnetic force of the solenoid coil 54 or the biasing force of the spring 56.

The high-pressure valve 28 and the low-pressure valve 30 are controlled to open and close by control signals (opening/closing command) sent from a valve controller. In some embodiments, the valve control part 106 (see FIG. 3) of the diagnosis-control part 100 provides the high-pressure valve 28 and the low-pressure valve 30 with control signals of the opening/closing command.

When the high-pressure valve 28 is not excited by a control signal from the valve control part 106, the movable unit 40 is biased toward the valve seat 46 by the spring 44, so as to be retained in a position where the working chamber 24 and the high-pressure line 12 are not in communication (normal position; the position of the movable unit 40 depicted in FIG. 4). When the high-pressure valve 28 is excited by a control signal from the valve control part 106, the movable unit 40 moves to a position (excitation position) where the working chamber 24 and the high-pressure line 12 communicate with each other by the electromagnetic force, against the biasing force of the spring 44. In other words, the high-pressure valve 28 is configured such that the valve body is movable by the supply control of the excitation current, between the normal position, where the excitation current is not supplied, and the excitation position, where the excitation current is supplied.

Furthermore, if the low-pressure valve 30 is not excited by a control signal from the valve control part 106, the movable unit 52 is biased in a direction away from the valve seat 58 by the spring 56, so as to be retained in a valve-open position where the working chamber 24 and the low-pressure line 14 are in communication with each other (normal position; the position of the movable unit 52 depicted in FIG. 4). If the low-pressure valve 30 is excited by a control signal from the valve control part 106, the electromagnetic force of the solenoid coil 54 attracts the armature 50 and the movable unit 52 moves toward the valve seat 58 by the electromagnetic force, against the biasing force of the spring 56, thereby moving to a valve-closed position (excitation position) where the working chamber 24 and the high-pressure line 12 are not in communication. In other words, the low-pressure valve 30 is configured such that the valve body is movable by the supply control of the excitation current, between the normal position, where the excitation current is not supplied, and the excitation position, where the excitation current is supplied.

In the hydraulic machine 20 having the high-pressure valve 28 and the low-pressure valve 30 of the above described configuration, a working-chamber pressure changes cyclically in accordance with the reciprocal motion of the piston 22 due to the opening/closing control on the high-pressure valve 28 and the low-pressure valve 30.

If the hydraulic machine 20 is the hydraulic motor 10, a differential pressure between the high-pressure line 12 and the low-pressure line 14 created by the hydraulic pump 8 moves the pistons 22 upward and downward cyclically, so that each piston 22 repeats a motor stroke of moving toward the bottom dead center from the top dead center and a discharge stroke of moving toward the top dead center from the bottom dead center. While the hydraulic motor 10 is operating, the capacity of the working chamber 24 formed by the piston 22 and the inner wall surface of the cylinder 21 changes cyclically. In other words, in the hydraulic motor 10, the high-pressure valve 28 is opened and the low-pressure valve 30 is closed during the motor stroke to cause working oil to flow into the working chamber 24 from the high-pressure line 12, and the high-pressure valve 28 is closed and the low-pressure valve 30 is opened during the discharge stroke to send out working oil having performed work in the working chamber 24 to the low-pressure line 14.

As described above, pressurized oil is introduced into the working chamber 24 to cause reciprocal motion of the piston 22, and the reciprocal motion is converted into rotational motion of the cam 26, so that the rotor shaft 32 of the hydraulic machine 20 rotates along with the cam 26.

If the hydraulic machine 20 is the hydraulic pump 8, rotation of the cam 26 along with the rotor shaft 32 moves the pistons 22 upward and downward cyclically in accordance with a cam surface, so that each piston 22 repeats a pump stroke of moving from the bottom dead center toward the top dead center and a suction stroke of moving from the top dead center toward the bottom dead center. Thus, the capacity of the working chamber 24 formed by the piston 22 and the inner wall surface of the cylinder 21 changes cyclically. In other words, in the hydraulic pump 8, the high-pressure valve 28 is closed and the low-pressure valve 30 is opened during the suction stroke to cause working oil to flow into the working chamber 24 from the low-pressure line 14, and the high-pressure valve 28 is opened and the low-pressure valve 30 is closed during the pump stroke to send out compressed working oil from the working chamber 24 to the high-pressure line 12.

As described above, the rotational motion of the cam 26 rotating with the rotor shaft 32 of the hydraulic machine 20 is converted into the reciprocal motion of the piston 22, so that the cyclic capacity change of the working chamber 24 takes place and high-pressure working oil (pressurized oil) is produced in the working chamber 24.

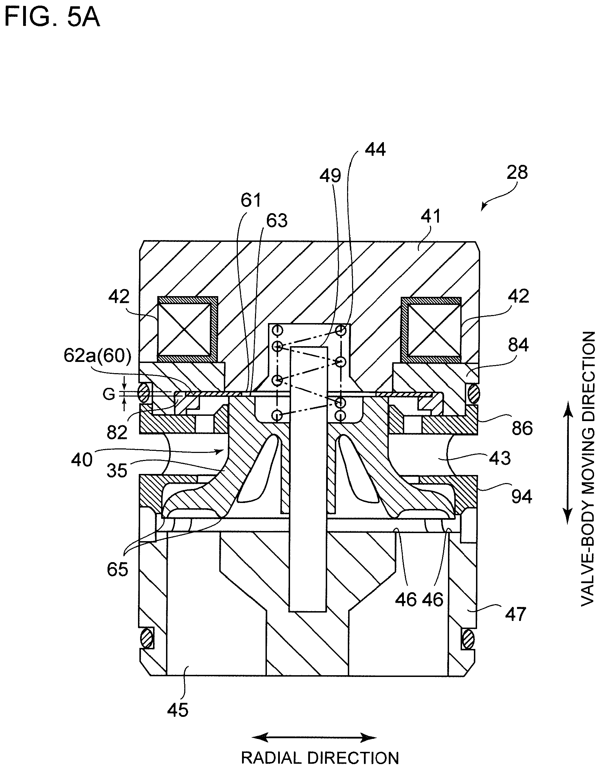

In some embodiments, in addition to the above described configuration, the solenoid valve (at least one of the high-pressure valve 28 or the low-pressure valve 30) further includes a characteristic configuration as described below. The characteristic configuration of the solenoid valve according to some embodiments will be described below with reference to FIGs. 5A to 5D. FIGs. 5A to 5D are each a cross-sectional view of a solenoid valve (high-pressure valve 28) according to an embodiment. The high-pressure valve 28 is open (in a valve-open state) in FIGs. 5A to 5D.

While the high-pressure valve 28 is depicted in FIGs. 5A to 5D as an example of a solenoid valve according to some embodiments, the solenoid valve according to some embodiments may be the low-pressure valve 30.

As depicted in FIGs. 5A to 5D, the high-pressure valve 28 (solenoid valve) includes a core (valve casing) 41 which accommodates a solenoid coil 42, and the valve body 35 is configured to be attracted toward the core 41 by a magnetic force generated by supplying the solenoid coil 42 with electric current.

The high-pressure valve 28 (solenoid valve) further includes a position restricting part 60 for restricting the position at which the valve body 35 and the core 41 are positioned closest when the valve body 35 is attracted toward the core 41.

The high-pressure valve 28 is communicable with the high-pressure line 12 (see FIG. 2) via a communication flow path 43, and is communicable with the working chamber 24 (see FIG. 2) via a communication flow path 45.

In some embodiments, the core 41 and the valve body 35 are both formed from a magnetic material. Furthermore, in some embodiments, the high-pressure valve 28 includes the position restricting part 60 as depicted in FIGs. 5A to 5D, and thus, even if the valve body 35 and the core 41 are closest to each other, a gap G is formed between the valve body 35 and the core 41 (i.e. between a lower end surface 61 of the core 41 and an upper end surface 63 of the valve body 35).

In this case, as compared to a case in which the core 41 of the high-pressure valve 28 (solenoid valve) and the valve body 35 contact each other directly, responsiveness of the valve body 35 can be improved.

The position restricting part 60 may be provided in different aspects.

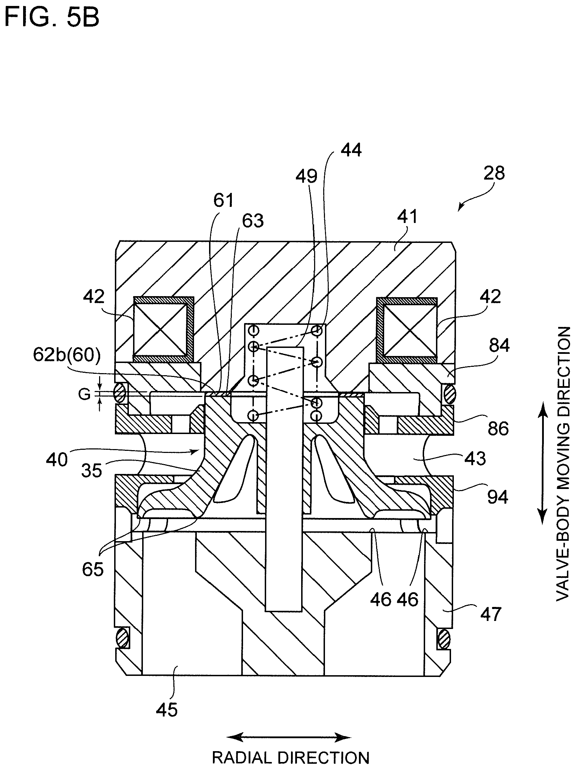

In the examples depicted in FIGs. 5A and 5B, the position restricting part 60 includes a non-magnetic layer 62 (62a or 62b) disposed between the valve body 35 and the core 41.

With the non-magnetic layer 62 interposed between the valve body 35 and the core 41, the position at which the valve body 35 and the core 41 are closest is restricted when the valve body 35 is attracted to the core 41.

Furthermore, with the non-magnetic layer 62 interposed between the valve body 35 and the core 41, magnetic bodies (the valve body 35 and the core 41) do not contact each other directly even if the valve body 35 and the core 41 are formed from a magnetic material, which improves responsiveness of the valve body 35.

The non-magnetic layer 62 depicted in FIG. 5A is a plate member 62a formed from a non-magnetic material. The plate member 62a is fixed to the core (valve casing) 41 with a clamp 82 in a state where a side of the plate member 62a is in contact with a lower end surface 61 of the core 41.

The non-magnetic layer 62 depicted in FIG. 5B is a sprayed layer 62b provided by spraying a non-magnetic material onto a surface (which is the surface facing the valve body 35) of the core 41.

In an embodiment, the sprayed layer 62b may be disposed on a surface (which is the surface facing the core 41) of the valve body 35.

The non-magnetic material constituting the non-magnetic layer 62 (e.g. the plate member 62a or the sprayed layer 62b) may include, for instance, beryllium copper or sterite. It is possible to form the non-magnetic layer 62 with high resistance against abrasion by using such a material.

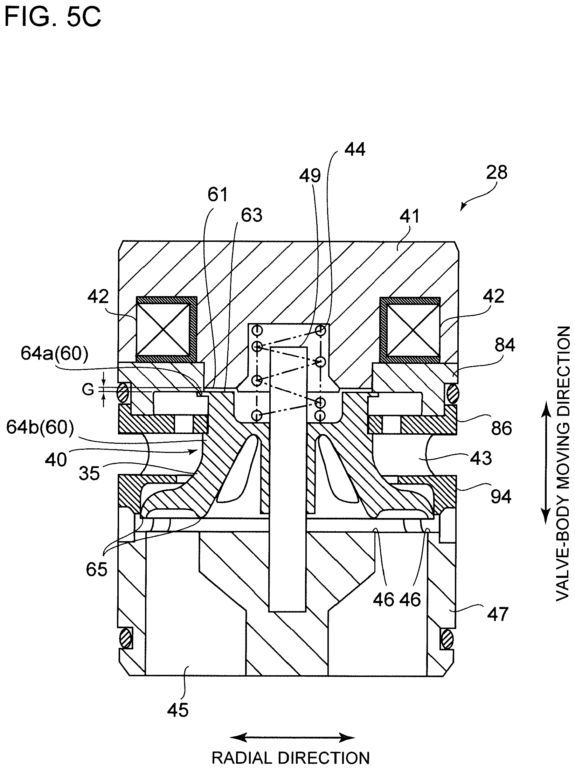

In the example depicted in FIG. 5C, the position restricting part 60 includes a stepped portion 64 (64a, 64b) disposed on the valve body 35.

In the example depicted in FIG. 5C, an annular member 84 with no magnetic property is disposed between the valve body 35 and the core 41 with respect to a moving direction of the valve body 35, and the annular member 84 is fixed to the core 41. A stepped portion 64a is formed to protrude outward in the radial direction of the valve body 35 at an upper end portion of the valve body 35, and is configured to contact the annular member 84 when the valve body 35 is positioned closest to the core 41. The stepped portion 64a comes into contact with the annular member 84, and thereby the position at which the valve body 35 and the core 41 are closest to each other is restricted when the valve body 35 is attracted to the core 41.

Furthermore, in the example depicted in FIG. 5C, an annular spacer 86 forming the communication flow path 43 is disposed between the core (valve casing) 41 and a valve casing 47, and the annular spacer 86 is fixed to the core 41 via the annular member 84. For the valve body 35, the stepped portion 64b is formed so as to protrude outward in the radial direction of the valve body 35 between an upper end surface 63 of the valve body 35 and a seat surface 65 (a surface that contacts the valve seat 46) with respect to the moving direction of the valve body 35. The stepped portion 64b is configured to contact the annular spacer 86 when the valve body 35 is positioned closest to the core 41. The stepped portion 64b comes into contact with the annular spacer 86 directly as described above, and thereby the position at which the valve body 35 and the core 41 are closest to each other is restricted when the valve body 35 is attracted to the core 41.

While the two stepped portion 64 including the stepped portions 64a and 64b are formed on the valve body 35 in the example depicted in FIG. 5C, one stepped portion 64 or three or more stepped portions 64 may be formed on the valve body 35 in some embodiments.

Furthermore, the stepped portion 64 as the position restricting part 60 may not be necessarily formed on the valve body 35. For instance, the stepped portion 64 may be disposed on the movable unit 40, which moves with the valve body 35 accompanying opening and closing of the high-pressure valve 28. The movable unit 40 may include a rod 49 for guiding movement of the valve body 35 between a valve-open position and a valve-closed position.

Alternatively, the stepped portion 64 may be disposed on a fixed structure (e.g. the annular member 84 or the annular spacer 86) of the high-pressure valve 28, which does not move with the valve body 35 accompanying opening and closing of the high-pressure valve 28.

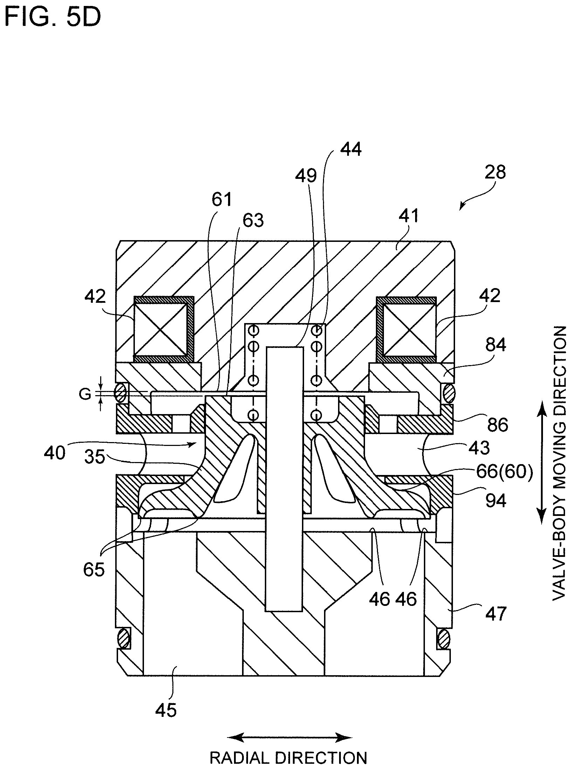

In the example depicted in FIG. 5D, the position restricting part 60 includes a back surface 66 of the valve body 35. Herein, the back surface 66 of the valve body 35 is a surface which is disposed opposite to the seat surface 65 across the valve body 35.

In this case, the back surface 66 of the valve body 35 is configured to contact the above described fixed structure (the annular spacer 86 in FIG. 4D) of the high-pressure valve 28, when the valve body 35 is attracted toward the core 41 and the valve body 35 and the core 41 are positioned closest to each other.

The back surface 66 of the valve body 35 is configured as described above, and thereby the position at which the valve body 35 and the core 41 are closest is restricted when the valve body 35 is attracted to the core 41.

Next, for the hydraulic machine 20 having the above described configuration, a method of diagnosing a hydraulic machine for detecting a damage of the position restricting part 60 will now be described.

A method of diagnosing the hydraulic machine 20 according to some embodiments includes a pressure detecting step of detecting a pressure of the working chamber 24, a response-delay calculating step of calculating a response delay on the basis of a pressure detection result, and a damage detecting step of detecting a damage of the position restricting part 60 on the basis of the calculated response delay.

Further, in some embodiments, the method of diagnosing the hydraulic machine 20 described below is performed by the above described diagnosis system 101.

(Pressure detecting step)

In the pressure detecting step, a pressure of the working chamber 24 (working chamber pressure) is detected. In the pressure detecting step, the working chamber pressure of each cylinder 21 may be detected by using the pressure sensor 72 disposed on each cylinder 21 of the hydraulic machine 20.

(Response-delay calculating step)

In the response-delay calculating step, a response delay DR, which is a period of time between the point of time when supply of electric current to the solenoid coil 42 is stopped to the point of time when the valve body 35 separates from the core 41, is calculated on the basis of a temporal change in a cylinder pressure obtained in the pressure detecting step.

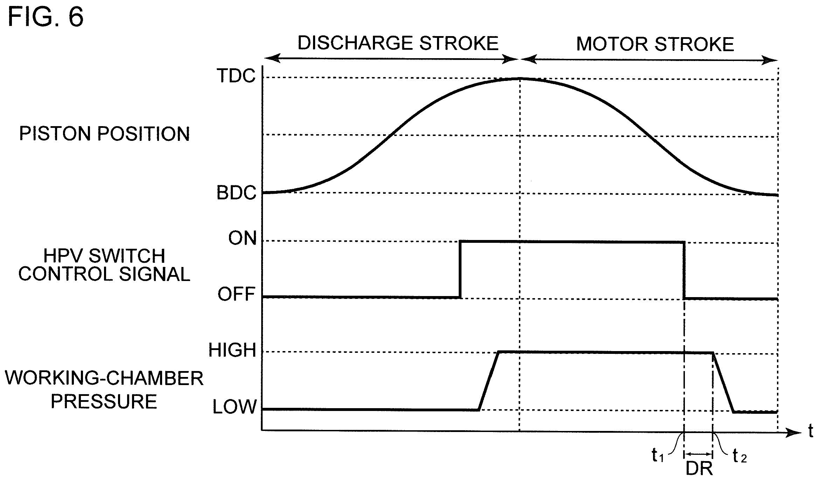

FIG. 6 is a graph showing a temporal change in a cylinder pressure (working-chamber pressure) obtained as a result of pressure detection, in the hydraulic motor 10, which is an example of the hydraulic machine 20 according to an embodiment.

In the graph of FIG. 6, x-axis represents time t, and y-axis represents the position of the piston 22, a control signal of the high-pressure valve 28, and a pressure of the working chamber 24. Herein, the control signal of the high-pressure valve 28 is a control signal (opening/closing command) outputted by a valve controller, "ON" representing that excitation current is being supplied to bring the high-pressure valve 28 into an open state, and "OFF" representing that supply of excitation current is stopped to bring the high-pressure valve 28 into a closed state.

As described above (see FIG. 6), in the hydraulic motor 10, when the piston 22 is at the vicinity of the top dead center, the low-pressure valve 30 is closed and the high-pressure valve 28 is opened to introduce high-pressure working oil into the working chamber 24 from the high-pressure line 12, and thus the working-chamber pressure increases. On the other hand, in the hydraulic motor 10, when the piston 22 is at the vicinity of the bottom dead center, the high-pressure valve 28 is closed and the low-pressure valve 30 is opened to discharge working oil from the working chamber 24 into the low-pressure line 14, and thus the working-chamber pressure decreases.

Herein, when the piston 22 is at the vicinity of the bottom dead center, the high-pressure valve 28 is provided with a control signal (closing command) for closing the high-pressure valve 28 by a valve controller, and the control signal becomes "OFF" as depicted in FIG. 6. In other words, at the point of time (time $t_1$) when the control signal becomes "OFF", supply of excitation current to the solenoid coil 42 for maintaining the high-pressure valve 28 in an opened state is stopped.

On the other hand, the point of time (time $t_2$) when the cylinder pressure (working chamber pressure) begins to decrease can be regarded as the time when the high-pressure valve 28 closes, i.e., the time when the valve body 35 separates from the core 41.

Thus, the period from time $t_1$, when the high-pressure valve 28 is provided with a closing command and supply of excitation current to the solenoid coil 42 is stopped, to time $t_2$, when the valve body 35 separates from the core 41 and the high-pressure valve 28 substantially closes, is defined as a response delay DR.

In an embodiment, a current value of excitation current supplied to the high-pressure valve 28 may be detected by an ammeter, for instance, and a response delay DR may be calculated from a relationship between a temporal change in the current value obtained as a result of detection of the excitation current and a temporal change in a cylinder pressure (working chamber pressure).

(Damage detecting step)

In the damage detecting step, a damage of the position restricting part 60 is detected on the basis of the response delay DR calculated in the response-delay calculating step.

According to the findings of the present inventors, it was found that the period (response delay DR) from the time when supply of electric current to the solenoid coil 42 is stopped to the time when the valve body 35 separates from the core 41 tends to become longer with development of a damage of the position restricting part 60 of the high-pressure valve 28 (solenoid valve). The reason may be as follows. If a damage such as abrasion develops on the position restricting part 60, a width of the gap G between the valve body 35 and the core 41 decreases due to the damage, and thereby an attracting force of the core 41 generated by supply of electric current to the solenoid coil 42 increases, which also increases the response delay DR.

Accordingly, it is possible to detect a damage of the position restricting part of the high-pressure valve 28 (solenoid valve) on the basis of the response delay DR from the time when supply of electric current to the solenoid coil 33 is stopped to the time when the valve body 35 separates from the core 41.

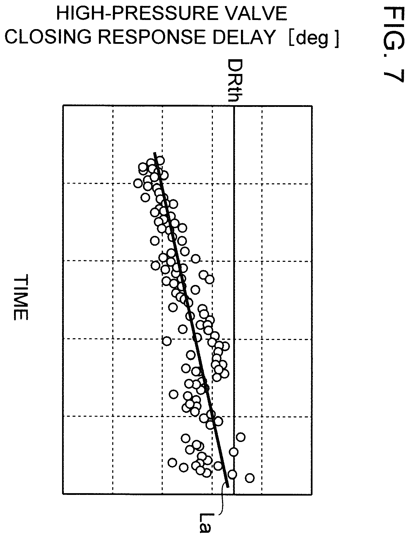

FIG. 7 is a graph of an example of a temporal change in a response delay DR of the hydraulic motor 10. In FIG. 7, an average value of data of a response delay DR of the hydraulic motor 10 in a predetermined period is plotted against time t on x-axis, the response delay DR being obtained as described above in each cycle of the reciprocal motion of the piston 22 in the hydraulic motor 10.

To obtain a response delay DR in each cycle of the reciprocal motion of the piston 22, the phase (piston position) of the piston 22 may be obtained by the rotation-speed sensor 74.

From the results shown in the graph of FIG. 7, it can be seen that the response delay DR tends to increase with operation time of the hydraulic motor 10. In other words, the response delay DR of the hydraulic motor 10 has a correlation with a degree of damage of the position restricting part 60, and thus it is possible to detect a damage of the position restricting part 60 on the basis of the response delay DR.

Further, if the response delay DR of the hydraulic motor 10 and the degree of damage of the position restricting part 60 corresponding to the response delay DR are determined in advance, it is possible to set an appropriate threshold DRth in relation to the response delay DR (see FIG. 7). In the damage detecting step, it is possible to determine whether a damage exists in the position restricting part 60, by comparing the threshold DRth and a result of calculation of the response delay DR.

For instance, it may be determined that a damage exists in the position restricting part 60, if the response delay DR is at the threshold DRth or more as a result of comparison between the threshold DRth and the calculated response delay DR.

Further, in some embodiments, in the damage detecting step, a degree of damage (degree of development of abrasion or the like) of the position restricting part 60 may be evaluated on the basis of a temporal change in the response delay DR.

For instance, a residual lifetime of the position restricting part 60 may be calculated from inclination of an approximate line La (see FIG. 7) of the response delay DR in a predetermined period and the threshold DRth set in advance.

If it is determined that a damage exists in the position restricting part 60 of the high-pressure valve 28 in the damage detecting step, the cylinder 21 corresponding to the high-pressure valve 28 may be caused to be in an inactive state of not generating a displacement, from among the cylinders 21 of the hydraulic machine 20. Alternatively, if it is determined that a damage exists in the position restricting part 60 of the high-pressure valve 28 in the damage detecting step, the high-pressure valve 28 may be replaced.

To cause the cylinder 21 of the hydraulic machine 20 to be in an inactive state, the valve control part 106 (see FIG. 3) sends a suitable control signal of an opening/closing command to the high-pressure valve 28 and the low-pressure valve 30 corresponding to the cylinder 21. To cause the cylinder 21 to be in the inactive state in the hydraulic machine 20 (hydraulic motor 10 or a hydraulic pump), the high-pressure valve 28 corresponding to the cylinder 21 is kept closed, and the low-pressure valve 30 is kept open. Accordingly, the cylinder 21 and the high-pressure line 12 come into a non-communicating state, while the cylinder 21 and the low-pressure line 14 come into a communicating state, and thereby working oil only flows in and out between the working chamber 24 and the low-pressure line 14. Thus, the piston 22 corresponding to the cylinder 21 does not perform any substantial work, or no substantially work is performed on the piston 22.

(Threshold determining step)

The threshold DRth to be compared to the response delay DR calculated in the damage detecting step may be set by the threshold setting part 104.

The threshold DRth to be compared to the response delay DR calculated in the damage detecting step may be set individually for each of the plurality of high-pressure valves 28 (solenoid valve).

For instance, in some embodiments, the threshold DRth may be determined on the basis of a statistical value (e.g. average) of the response delay DR in an initial state (at the beginning of usage) of the high-pressure valve 28 (solenoid valve).

As described above, it is possible to set an appropriate threshold DRth individually for each solenoid valve by determining a threshold DRth on the basis of a statistical value of the response delay DR in an initial state of the solenoid valve.

While the high-pressure valve 28 of normally-closed type is described as an example of a solenoid valve in the above description, in an embodiment, a similar diagnosis method or system can be applied to the hydraulic machine 20 provided with a solenoid valve of normally-open type.

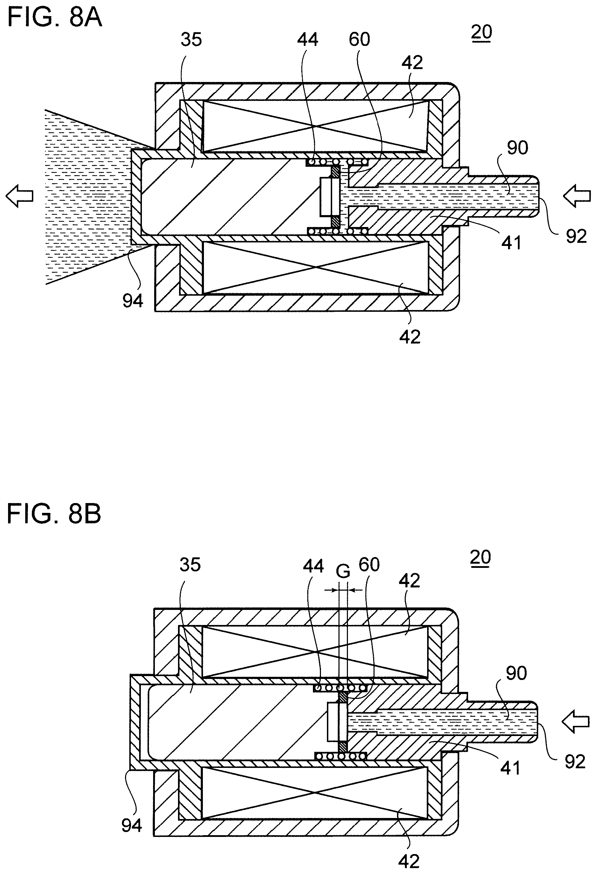

FIGs. 8A and 8B are cross-sectional views of a solenoid valve of normally-open type according to an embodiment. The solenoid valve depicted in FIGs. 8A and 8B is a solenoid valve configured to be supplied with working oil 90 through an inlet 92 and to discharge the working oil 90 through an outlet 94, in the hydraulic machine 20. FIG. 8A is a view where the valve body 35 is positioned in a normal position (which is an open position), while FIG. 8B is a view where the valve body 35 is in an excitation position (which is a closed position). Further, in FIGs. 8A and 8B, each of the main constituent elements corresponding to the solenoid valve depicted in FIGs. 5A to 5D is associated with the same reference numerals in FIGs. 5A to 5D.

As depicted in FIG. 8B, the valve body 35 is closed by being attracted toward the core 41 by a magnetic force which is generated by supplying the coil 42 with electric current.

When the valve body 35 is attracted, the position at which the valve body 35 is closest to the core 41 is restricted by the position restricting part 60. Further, since the position restricting part 60 restricts the position of the valve body 35 relative to the core 41, a gap G is formed between the valve body 35 and the core 41 at the position where the valve body 35 is disposed closest to the core 41.

If the solenoid valve is of normally-open type, the response delay DR calculated in the response-delay calculating step is a period from the time when supply of electric current to the coil 42 is stopped (when an opening command is outputted to the solenoid valve) to the time when the valve body 35 separates from the core 41 to open, which is in other words, "opening response delay".

In contrast, if the solenoid valve is of normally-closed type as described above, the response delay DR calculated in the response-delay calculating step is a period from the time when supply of electric current to the coil 42 is stopped (when a closing command is outputted to the solenoid valve) to the time when the valve body 35 separates from the core 41 to close, which is in other words, "closing response delay".

Furthermore, while a damage of the position restricting part 60 is detected by using the value of the response delay DR (see FIG. 6) itself, which is a period from the time when supply of electric current to the solenoid coil 42 is stopped to the time when the valve body 35 separates from the core 41 in the above described embodiment, in an example useful for understanding the invention, a damage of the position restricting part 60 may be detected by using a speed V of the piston 22 and a normalized response delay DR* normalized in accordance with the rotation speed N of the rotor shaft 32. In this case, for instance, it may be determined that a damage exists in the position restricting part 60, if the normalized response delay DR* is at least the threshold DRth as a result of comparison between the above described threshold DRth and the normalized response delay DR*.

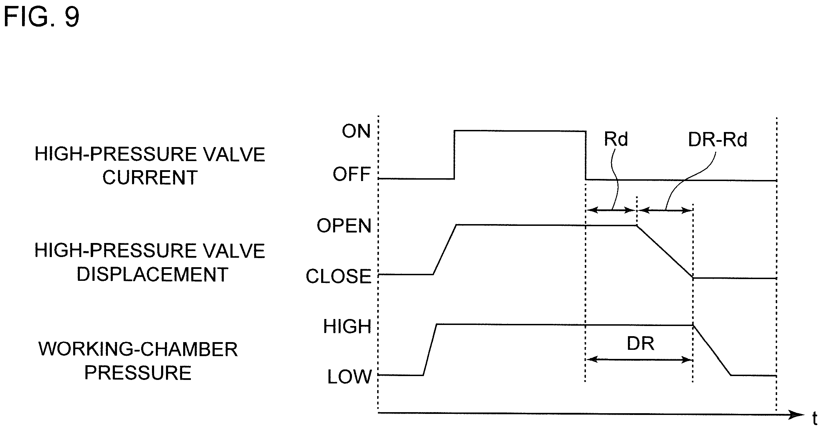

FIG. 9 is a diagram of a response delay DR divided into a component Rd that depends on a rotation speed and a component (DR-Rd) that depends on a piston speed.

As depicted in FIG. 9, the response delay DR can be regarded as a sum of the first delay Rd until the time when the valve body 35 of the high-pressure valve 28 starts moving toward the non-excitation position in response to supply of electric current to the solenoid coil 42, and the second delay (DR-Rd) until the time when the valve body 35 reaches the non-excitation position. Herein, the first delay Rd does not directly depend on the speed V of the piston 22, but on the rotation speed N of the rotor shaft 32, specifically, in reverse proportion to the rotation speed N. On the other hand, the second delay (DR-Rd) depends on the speed V of the piston 22, specifically, in reverse proportion to the piston speed V.

Accordingly, the response delay DR can be normalized by the following expression (1):
(Expression 1)

$$DR^* = (DR\text{-}RdB) \times V/VB + Rd \times N/NB \qquad (1)$$

where RdB is a standard first delay, which is the first delay Rd being a standard, VB is a standard piston speed, which is the speed V of the piston 22 being a standard, and NB is a standard rotation speed, which is the rotation speed N of the rotor shaft 32 being a standard.

Accordingly, it is possible to obtain, for a plurality of operation states in which the speed V of the piston 22 and the rotation speed N of the rotor shaft 32 are varied, the normalized response delay DR* excluding an influence from a difference in V and R, and thereby it is possible to detect a damage of the position restricting part 60 with high accuracy regardless of the operational state of the hydraulic machine 20.

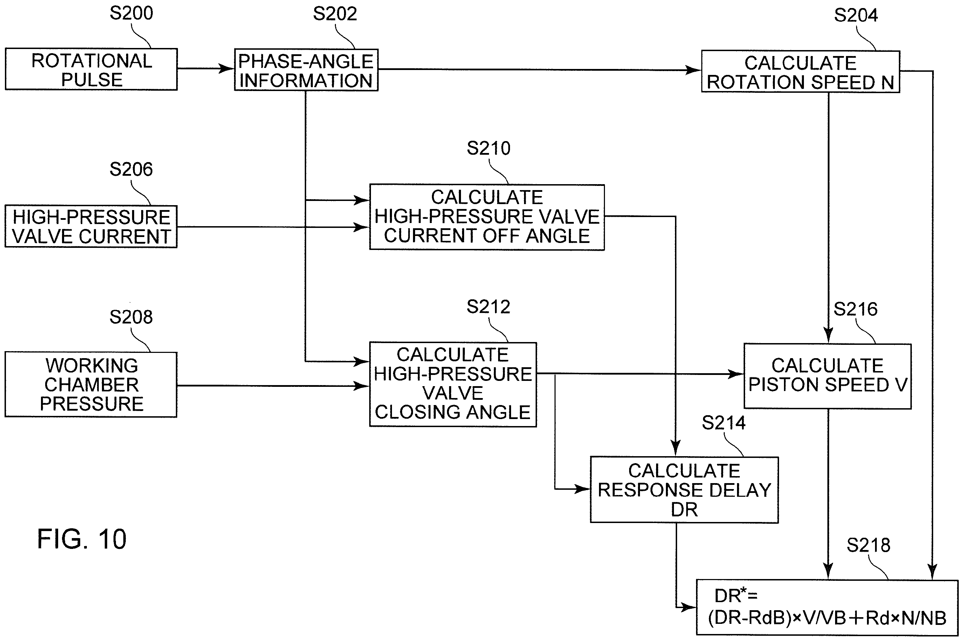

FIG. 10 is a diagram showing signal processing which represents a method of calculating a normalized response delay DR* according to an example useful for understanding the invention.

As depicted in the drawing, a rotational pulse of the rotor shaft 32 is obtained by a pulse counter (S200). Next, phase-angle information is calculated from the measurement result of the rotational pulse 200 (S202). The rotation speed N of the rotor shaft 32 can be obtained from the phase-angle information 202 (S204). Furthermore, a current value of the solenoid 42, and a pressure in the working chamber 24 (cylinder pressure) are monitored (S206 and S208). From the phase-angle information obtained in S202, a phase angle at the time when a current value of the solenoid 42 reaches zero (at the time when supply of electric current to the solenoid 42 is stopped) is calculated (S210). Further, from the phase-angle information obtained in S202, a phase angle at the time when the cylinder pressure starts to decrease (the time when the valve body 35 separates from the core 41 to reach the non-excitation position) is calculated (S212). A difference between the phase angle calculated in S210 and the phase angle calculated in S212 is obtained, and thereby a response delay DR is calculated (S214). Furthermore, from the rotation speed N of the rotor shaft 32 obtained in S204 and the phase angle obtained in S212, the speed V of the piston 22 at the time when the valve body 35 separates from the core 41 to reach the non-excitation position is obtained (S216). Accordingly, the above equation (1) is substituted with the response delay DR, the rotation speed N obtained in S204, the piston speed V obtained in S216, and the known parameters (the standard first delay RdB, the standard piston speed VB, and the standard piston speed VB), and thereby a normalized response delay DR* can be calculated (S218).

Further, in some examples useful for understanding the invention, the above processes (S200 to S218) can be performed by the response-delay calculating part 103 of the diagnosis system 101. In this case, the damage detecting part 102 of the diagnosis system 101 may detect a damage of the position restricting part 60 on the basis of a result of comparison between the normalized response delay DR* calculated by the response-delay calculating part 103 and the threshold DRth set by the threshold setting part 104.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

## Claims

1. A hydraulic machine (20) comprising:

   a rotor shaft (32);
   a cylinder (21);
   a piston (22) forming a working chamber (24) together with the cylinder (21);
   a high-pressure valve (28) and a low-pressure valve (30) provided for the working chamber (24), wherein the hydraulic machine (20) is configured to perform conversion between rotational motion of the rotor shaft (32) and reciprocal motion of the piston (22), and
   wherein at least one of the high-pressure valve (28) or the low-pressure valve (30) comprises a solenoid valve which includes:

      a valve body (35) configured to be attracted toward a core (41) by a magnetic force generated by supplying electric current to a coil (42); and
      a position restricting part (60) for restricting a position at which the valve body (35) is closest to the core (41) when attracted, wherein the position restricting part (60) comprises a non-magnetic layer (62) disposed between the valve body (35) and the core (41); and

   a diagnosis system (101) comprising:

      a pressure sensor (72) for detecting a pressure of the working chamber (24);
      a response-delay calculating part (103) configured to calculate, on the basis of a temporal change in a cylinder pressure obtained by the pressure sensor (72), a response delay (DR) which is a period of time from a point of time ($t_1$) when supply of electric current to the coil (42) is stopped to a point of time ($t_2$) when the working chamber pressure begins to decrease; and

a damage detecting part (102) configured to detect a damage of the solenoid valve, such as a damage of the position restricting part (60) on the basis of the response delay (DR).

2.  The hydraulic machine (20) according to claim 1,
    wherein each of the valve body (35) and the core (41) comprises a magnetic material, and
    wherein the solenoid valve is configured to form a gap (G) between the valve body (35) and the core (41) when the valve body (35) and the core (41) are closest to each other.

3.  The hydraulic machine (20) according to claim 1 or 2,
    wherein the non-magnetic layer (62) comprises a plate member (62a) comprising a non-magnetic material.

4.  The hydraulic machine (20) according to claim 1 or 2,
    wherein the non-magnetic layer (62) comprises a sprayed layer (62b) comprising a non-magnetic material disposed on a surface of at least one of the valve body (35) or the core (41).

5.  The hydraulic machine (20) according to any one of claims 1 to 4 configured to cause the cylinder (21) corresponding to the solenoid valve including the position restricting part (60) to be in an inactive state of not generating a displacement, if a damage of the position restricting part (60) is detected by the diagnosis system (101).

6.  A renewable-energy type power generating apparatus (1), comprising:

    a rotor (3) configured to receive renewable energy to rotate;
    a hydraulic pump (8) configured to be driven by the rotor (3) to pressurize working oil;
    a hydraulic motor (10) configured to be driven by the working oil pressurized by the hydraulic pump (8);
    a high-pressure line (12) connecting an outlet of the hydraulic pump (8) and an inlet of the hydraulic motor (10);
    a low-pressure line (14) connecting an outlet of the hydraulic motor (10) and an inlet of the hydraulic pump (8); and
    a generator (16) configured to be driven by the hydraulic motor (10),
    wherein at least one of the hydraulic pump (8) or the hydraulic motor (10) is the hydraulic machine (20) according to any one of claims 1 to 5.

7.  A method of diagnosing a hydraulic machine (20) which comprises a rotor shaft (32), a cylinder (21), a piston (22) forming a working chamber (24) together with the cylinder (21), and a high-pressure valve (28) and a low-pressure valve (30) provided for the working chamber (24), and which is configured to perform conversion between rotational motion of the rotor shaft (32) and reciprocal motion of the piston (22),
    at least one of the high-pressure valve (28) or the low-pressure valve (30) comprising a solenoid valve which includes:

    a valve body (35) configured to be attracted toward a core (41) by a magnetic force generated by supplying electric current to a coil (42); and
    a position restricting part (60) for restricting a position at which the valve body (35) is closest to the core (41) when attracted, wherein the position restricting part (60) comprises a non-magnetic layer (62) disposed between the valve body (35) and the core (41),

    the method comprising:

    a pressure detecting step of detecting a pressure of the working chamber (24);
    a step of calculating, on the basis of a temporal change in a cylinder pressure obtained in the pressure detecting step, a response delay (DR) which is a period of time from a point of time $(t_1)$ when supply of electric current to the coil (42) is stopped to a point of time $(t_2)$ when the working chamber pressure begins to decrease; and
    a step of detecting a damage of the solenoid valve, such as a damage of the position restricting part (60) on the basis of the response delay (DR).

**Patentansprüche**

1.  Eine hydraulische Maschine (20) mit:

    einer Rotorwelle (32),
    einem Zylinder (21),

einem Kolben (22), der zusammen mit dem Zylinder (21) eine Arbeitskammer (24) bildet,
einem Hochdruckventil (28) und einem Niederdruckventil (30), die für die Arbeitskammer (24) vorgesehen sind,
wobei die hydraulische Maschine (20) konfiguriert ist, um eine Umwandlung zwischen einer Rotationsbewegung der Rotorwelle (32) und einer Hin-und-Her-Bewegung des Kolbens (22) auszuführen, und
wobei zumindest eines von dem Hochdruckventil (28) oder der Niederdruckventil (30) ein Solenoidventil aufweist, das umfasst:

einen Ventilkörper (35), der konfiguriert ist, um zu einem Kern (41) durch eine Magnetkraft angezogen zu werden, welche durch Zuführen von elektrischem Strom zu einer Spule (42) erzeugt wird, und
ein Positionsbegrenzungsteil (60) zum Begrenzen einer Position, an der der Ventilkörper (35) sich am nächsten bei dem Kern (41) befindet, wenn er angezogen wird, wobei das Positionsbegrenzungsteil (60) eine nichtmagnetische Schicht oder Lage (62) aufweist, die zwischen dem Ventilkörper (35) und dem Kern (41) angeordnet ist, und

einem Diagnosesystem (101), mit:

einem Drucksensor (72) zum Erfassen eines Drucks der Arbeitskammer (24),
einem Antwortverzögerungs-Berechnungsteil (103), das konfiguriert ist, um auf der Basis einer temporären Änderung in einem Zylinderdruck, der durch den Drucksensor (72) erhalten ist, eine Antwortverzögerung (DR) zu berechnen, die eine Zeitperiode von einem Zeitpunkt ($t_1$), wenn eine Zufuhr von elektrischem Strom zu der Spule (42) gestoppt wird, zu einem Zeitpunkt ($t_2$), wenn der Arbeitskammerdruck abzunehmen beginnt, ist, zu berechnen, und
einem Beschädigungs-Erfassungsteil (102), das konfiguriert ist, um eine Beschädigung des Solenoidventils wie eine Beschädigung des Positionsbegrenzungsteils (60) auf der Basis der Antwortverzögerung (DR) zu erfassen.

2. Die hydraulische Maschine (20) gemäß Anspruch 1,
wobei jeder von dem Ventilkörper (35) und dem Kern (41) ein Magnetmaterial aufweist, und
wobei das Solenoidventil konfiguriert ist, um einen Zwischenraum (G) zwischen dem Ventilkörper (35) und dem Kern (41) zu bilden, wenn der Ventilkörper (35) und der Kern (41) am nächsten zueinander sind.

3. Die hydraulische Maschine (20) gemäß Anspruch 1 oder 2,
wobei die nichtmagnetische Lage (62) ein Plattenelement (62a) mit einem nichtmagnetischen Material aufweist.

4. Die hydraulische Maschine (20) gemäß Anspruch 1 oder 2,
wobei die nichtmagnetische Lage (62) eine aufgesprühte Lage (62b) aufweist, die ein nichtmagnetisches Material umfasst, die auf einer Oberfläche von zumindest einem von dem Ventilkörper (35) oder dem Kern (41) angeordnet ist.

5. Die hydraulische Maschine (20) gemäß einem der Ansprüche 1 bis 4, die konfiguriert ist, um zu bewirken, dass der Zylinder (21) entsprechend dem Solenoidventil mit dem Positionsbegrenzungsteil (60) in einem inaktiven Zustand ist, bei dem keine Verdrängung erzeugt wird, wenn eine Beschädigung des Positionsbegrenzungsteils (60) durch das Diagnosesystem (101) erfasst ist.

6. Eine Stromerzeugungsvorrichtung für erneuerbare Energie (1) mit:

einem Rotor (3), der konfiguriert ist, um erneuerbare Energie zur Drehung zu empfangen,
einer hydraulischen Pumpe (8), die konfiguriert ist, um durch den Rotor zum Druckbeaufschlagen von Arbeitsöl angetrieben zu werden,
einem hydraulischen Motor (10), der konfiguriert ist, um durch das durch die hydraulische Pumpe (8) mit Druck beaufschlagte Arbeitsöl angetrieben zu werden,
einer Hochdruckleitung (12), die einen Auslass der hydraulischen Pumpe (8) und einen Einlass des hydraulischen Motors (10) verbindet,
einer Niederdruckleitung (14), die einen Auslass des hydraulischen Motors (10) und einen Einlass der hydraulischen Pumpe (8) verbindet, und
einem Generator (16), der konfiguriert ist, um durch den hydraulischen Motor (10) angetrieben zu werden,
wobei zumindest eine von der hydraulischen Pumpe (8) oder dem hydraulischen Motor (10) die hydraulische Maschine (20) gemäß einem der Ansprüche 1 bis 5 ist.

**7.** Ein Verfahren zum Diagnostizieren einer hydraulischen Maschine (20), die aufweist:

eine Rotorwelle (32), einen Zylinder (21), einen Kolben (22), der zusammen mit dem Zylinder (21) eine Arbeitskammer (24) bildet, und ein Hochdruckventil (28) sowie ein Niederdruckventil (30), die für die Arbeitskammer (24) vorgesehen sind, und die konfiguriert ist, um eine Umwandlung zwischen einer Rotationsbewegung der Rotorwelle (32) und einer Hin-und-Her-Bewegung des Kolbens (22) auszuführen,
wobei zumindest eines von dem Hochdruckventil (28) oder der Niederdruckventil (30) ein Solenoidventil aufweist, das umfasst:

einen Ventilkörper (35), der konfiguriert ist, um zu einem Kern (41) durch eine Magnetkraft angezogen zu werden, welche durch Zuführen von elektrischem Strom zu einer Spule (42) erzeugt wird, und
ein Positionsbegrenzungsteil (60) zum Begrenzen einer Position, an der der Ventilkörper (35) sich am nächsten bei dem Kern (41) befindet, wenn er angezogen wird, wobei das Positionsbegrenzungsteil (60) eine nichtmagnetische Schicht oder Lage (62) aufweist, die zwischen dem Ventilkörper (35) und dem Kern (41) angeordnet ist,

wobei das Verfahren aufweist:

einen Druckerfassungsschritt des Erfassens eines Drucks der Arbeitskammer (24),
einen Schritt des Berechnens, auf der Basis einer temporären Änderung in einem in dem Druckerfassungsschritt erhaltenen Zylinderdruck, einer Reaktionsverzögerung (DR), die eine Zeitspanne von einem Zeitpunkt ($t_1$), wenn eine Zufuhr von elektrischem Strom zu der Spule (42) gestoppt wird, zu einem Zeitpunkt ($t_2$), wenn der Arbeitskammerdruck abzufallen beginnt, ist, und
einen Schritt des Erfassens einer Beschädigung des Solenoidventils, wie eine Beschädigung des Positionsbegrenzungsteils (60) auf der Basis der Reaktionsverzögerung (DR).

## Revendications

**1.** Machine (20) hydraulique, comprenant :

un arbre (32) de rotor ;
un cylindre (21) ;
un piston (22) formant une chambre (24) de travail ensemble avec le cylindre (21) ;
une vanne (28) de haute pression et une vanne (30) de basse pression, prévues pour la chambre (24) de travail, la machine (20) hydraulique étant configurée pour effectuer une transformation entre un mouvement de rotation de l'arbre (32) du rotor et un mouvement alternatif du piston (22) et
dans laquelle au moins l'une de la vanne (28) de haute pression ou de la vanne (30) de basse pression comprend une électrovanne, qui comporte :

un corps (35) de vanne, configuré pour être attiré vers un noyau (41) par une force magnétique produite en fournissant du courant électrique à une bobine (42) et
une partie (60) de restriction de position pour restreindre une position où le corps (35) de la vanne est le plus près du noyau (41), lorsqu'il est attiré, la partie (60) de restriction de position comprenant une couche (62) amagnétique, disposée entre le corps (35) de la vanne et le noyau (41) et
un système (101) de diagnostic, comprenant :

un capteur (72) de pression pour détecter une pression dans la chambre (24) de travail ;
une partie (103) de calcul d'un retard de réponse, configurée pour calculer, sur la base d'une variation dans le temps de la pression dans le cylindre obtenue par le capteur (72) de pression, un retard (DR) de réponse, qui est une durée allant d'un instant ($t_1$), où l'alimentation en courant électrique de la bobine (42) est arrêtée, à un instant ($t_2$), où la pression dans la chambre de travail commence à diminuer et
une partie (102) de détection d'un endommagement, configurée pour détecter un endommagement de l'électrovanne, tel qu'un endommagement de la partie (6) de restriction de position, sur la base du retard (DR) de réponse.

**2.** Machine (20) hydraulique suivant la revendication 1,

dans laquelle chacun du corps (35) de la vanne et du noyau (41) comprend un matériau magnétique et
dans laquelle l'électrovanne est configurée pour former un intervalle (G) entre le corps (35) de la vanne et le noyau (41), lorsque le corps (35) de la vanne et le noyau (41) sont le plus près l'un de l'autre.

3. Machine (20) hydraulique suivant la revendication 1 ou 2,
dans laquelle la couche (62) amagnétique comprend un élément (62a) en forme de plaque, comprenant un matériau amagnétique.

4. Machine (20) hydraulique suivant la revendication 1 ou 2,
dans laquelle la couche (62) amagnétique comprend une couche (62b) pulvérisée, comprenant un matériau amagnétique disposé sur une surface d'au moins l'un du corps (35) de la vanne ou du noyau (41).

5. Machine (20) hydraulique suivant l'une quelconque des revendications 1 à 4, configurée pour faire en sorte que le cylindre (21) correspondant à l'électrovanne, comportant la partie (60) de restriction de position, soit dans un état inactif ou il ne produit pas un déplacement, si un endommagement de la partie (60) de restriction de position est détecté par le système (101) de diagnostic.

6. Installation (1) de production de courant du type à énergie renouvelable, comprenant :

   un rotor (3), configuré pour recevoir de l'énergie renouvelable afin de tourner ;
   une pompe (8) hydraulique, configurée pour être entraînée par le rotor (3) pour mettre de l'huile de travail sous pression ;
   un moteur (10) hydraulique, configuré pour être entraîné par l'huile de travail mise sous pression par la pompe (8) hydraulique ;
   une ligne (12) de haute pression, mettant une sortie de la pompe (8) hydraulique en communication avec une entrée du moteur (10) hydraulique ;
   une ligne (14) de basse pression, mettant une sortie du moteur (10) hydraulique en communication avec une entrée de la pompe (8) hydraulique et
   une génératrice (16), configurée pour être entraînée par le moteur (10) hydraulique,
   dans laquelle au moins de la pompe (8) hydraulique ou du moteur (10) hydraulique est la machine (20) hydraulique suivant l'une quelconque des revendications 1 à 5.

7. Procédé pour donner un diagnostic sur une machine (20) hydraulique, qui comprend un arbre (32) de rotor, un cylindre (21), un piston (22) formant une chambre (24) de travail ensemble avec le cylindre (21), une vanne (28) de haute pression et une vanne (30) de basse pression, prévues pour la chambre (24) de travail, et qui est configurée pour effectuer une transformation entre un mouvement de rotation de l'arbre (32) du rotor et un mouvement alternatif du piston (22),
au moins une de la vanne (28) de haute pression ou de la vanne (30) de basse pression comprend une électrovanne, qui comporte :

   un corps (35) de vanne, configuré pour être attiré vers un noyau (41) par une force magnétique produite en fournissant du courant électrique à une bobine (42) et
   une partie (60) de restriction de position pour restreindre une position où le corps (35) de la vanne est le plus près du noyau (41), lorsqu'il est attiré, la partie (60) de restriction de position comprenant une couche (62) amagnétique, disposée entre le corps (35) de la vanne et le noyau (41),
   le procédé comprenant :

      un stade de détection de la pression, dans lequel on détecte une pression dans la chambre (2) de travail ;
      un stade de calcul, sur la base d'une variation dans le temps de la pression dans le cylindre obtenue par le capteur (72) de pression, d'un retard (DR) de réponse, qui est une durée allant d'un instant ($t_1$), où l'alimentation en courant électrique de la bobine (42) est arrêtée, à un instant ($t_2$), où la pression dans la chambre de travail commence à diminuer et
      un stade de détection d'un endommagement de l'électrovanne, tel qu'un endommagement de la partie (60) de restriction de position, sur la base du retard (DR) de réponse.

## FIG. 1

# FIG. 2

100 DIAGNOSIS-CONTROL PART

# FIG. 3

<u>101</u>

100

DIAGNOSIS-CONTROL PART

| PRESSURE SENSOR |
72

| DAMAGE DETECTING PART | 102

106

| VALVE CONTROL PART |

| RESPONSE-DELAY CALCULATING PART | 103

| ROTATION-SPEED SENSOR |
74

| THRESHOLD SETTING PART | 104

FIG. 4

EP 3 211 276 B1

## FIG. 5A

RADIAL DIRECTION

VALVE-BODY MOVING DIRECTION

FIG. 5B

RADIAL DIRECTION

VALVE-BODY MOVING DIRECTION

FIG. 5C

FIG. 5D

## FIG. 6

DISCHARGE STROKE | MOTOR STROKE

PISTON POSITION

TDC

BDC

HPV SWITCH
CONTROL SIGNAL

ON

OFF

WORKING-CHAMBER
PRESSURE

HIGH

LOW

t

$t_1$  $t_2$

DR

EP 3 211 276 B1

FIG. 7

FIG. 8A

FIG. 8B

FIG. 9

HIGH-PRESSURE VALVE
CURRENT

HIGH-PRESSURE VALVE
DISPLACEMENT

WORKING-CHAMBER
PRESSURE

ON
OFF

Rd          DR-Rd

OPEN

CLOSE

HIGH

DR

LOW

t

EP 3 211 276 B1

**FIG. 10**

| | | |
|---|---|---|
| ROTATIONAL PULSE | PHASE-ANGLE INFORMATION | CALCULATE ROTATION SPEED N |

S200 → S202 → S204

S206 — HIGH-PRESSURE VALVE CURRENT

S210 — CALCULATE HIGH-PRESSURE VALVE CURRENT OFF ANGLE

S208 — WORKING CHAMBER PRESSURE

S212 — CALCULATE HIGH-PRESSURE VALVE CLOSING ANGLE

S214 — CALCULATE RESPONSE DELAY DR

S216 — CALCULATE PISTON SPEED V

S218 — $DR^* = (DR - RdB) \times V/VB + Rd \times N/NB$

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014024232 A
- EP 28898480 A1
- EP 0576813 A1